(19) Europäisches Patentamt
European Patent Office
Office européen des brevets

(11) **EP 4 224 572 A1**

(12) **EUROPEAN PATENT APPLICATION**
published in accordance with Art. 153(4) EPC

(43) Date of publication:
**09.08.2023 Bulletin 2023/32**

(21) Application number: **21874952.1**

(22) Date of filing: **18.08.2021**

(51) International Patent Classification (IPC):
***H01M 4/36*** (2006.01)   ***H01M 4/505*** (2010.01)
***H01M 4/525*** (2010.01)

(52) Cooperative Patent Classification (CPC):
**H01M 4/36; H01M 4/505; H01M 4/525;** Y02E 60/10

(86) International application number:
**PCT/JP2021/030128**

(87) International publication number:
**WO 2022/070649 (07.04.2022 Gazette 2022/14)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **30.09.2020 JP 2020165403**

(71) Applicant: **Panasonic Intellectual Property Management Co., Ltd.**
**Osaka-shi, Osaka 540-6207 (JP)**

(72) Inventors:
• JITO, Daizo
  Osaka-shi, Osaka 540-6207 (JP)
• HARADA, Tomohiro
  Osaka-shi, Osaka 540-6207 (JP)
• FUKAMICHI, Noriko
  Osaka-shi, Osaka 540-6207 (JP)
• OGASAWARA, Takeshi
  Osaka-shi, Osaka 540-6207 (JP)

(74) Representative: **Novagraaf International SA**
**Chemin de l'Echo 3**
**1213 Onex, Geneva (CH)**

(54) **POSITIVE ELECTRODE ACTIVE MATERIAL FOR NONAQUEOUS ELECTROLYTE SECONDARY BATTERIES, AND NONAQUEOUS ELECTROLYTE SECONDARY BATTERY**

(57)    A positive electrode active material according to the present invention contains first and second lithium-transition metal complex oxides at respective predetermined proportions. The first lithium-transition metal complex oxide includes a core containing at least Li, Ni, and M1 (M1 is at least one element selected from the group consisting of Mn, W, Mg, Mo, Nb, Ti, Si, and Al), and a surface modification layer that is present at least on the surface of the core. The surface modification layer includes M2 (M2 is at least one element selected from the group consisting of Sr, Ca, W, Mg, Nb, and Al). The second lithium-transition metal complex oxide includes at least a compound represented by general formula $Li_aNi_bM3_{1-b}O_2$ (in the formula, $1.5 \leq a \leq 2.5$ and $0.95 \leq b \leq 1$ are satisfied, and M3 is at least one element selected from the group consisting of Cu, Sr, Ca, Nb, Si, and Al).

Figure 2

**Description**

TECHNICAL FIELD

The present disclosure relates to a positive electrode active material for a non-aqueous electrolyte secondary battery, and a non-aqueous electrolyte secondary battery.

BACKGROUND

Non-aqueous electrolyte secondary batteries that are charged and discharged as, for example, Li ions are moved between a positive electrode and a negative electrode have been heretofore widely used and, in recent years, there are increasing demands for further improved battery characteristics. Patent Literature 1 discloses a secondary battery including a negative electrode that contains an irreversible negative electrode active material such as a Si-based material, and further including a positive electrode that contains $Li_2NiO_2$ as a Li replenishing agent, thereby supplying a sufficient amount of Li ions to the negative electrode during initial charging to reduce the decrease in capacity retention rate during initial charge and discharge.

CITATION LIST

PATENT LITERATURE

Patent Literature 1: Japanese Patent No. 6058151

SUMMARY

The secondary battery described above has a problem in that, as highly active $LiNiO_2$ is present in the positive electrode active material after initial charge and discharge, $LiNiO_2$ reacts with an electrolyte and therefore increases the resistance after repeated charge and discharge. The technique disclosed in Patent Literature 1 does not take into consideration an increase in resistance during initial charge and discharge, and still has room for improvement.

According to an aspect of the present disclosure, there is provided a positive electrode active material for a non-aqueous electrolyte secondary battery, comprising a first lithium transition metal composite oxide and a second lithium transition metal composite oxide. The mass ratio of the second lithium transition metal composite oxide is greater than or equal to 0.1% and less than 15% relative to the total mass of the first lithium transition metal composite oxide and the second lithium transition metal composite oxide. The first lithium transition metal composite oxide comprises a core represented by a general formula $Li_xNi_{1-y-z}Co_yM1_zO_2$ (where $0.97 \leq x \leq 1.2$, $0 \leq y \leq 0.2$, $0 < z \leq 0.5$, and M1 represents at least one element selected from Mn, W, Mg, Mo, Nb, Ti, Si, and Al) and a surface modification layer present at least on a surface of the core. The surface modification layer contains M2 (M2 represents at least one or more elements selected from Sr, Ca, W, Mg, Nb, and Al). The second lithium transition metal composite oxide comprises at least a compound represented by a general formula $Li_aNi_bM3_{1-b}O_2$ (where $1.5 \leq a \leq 2.5$, $0.95 \leq b \leq 1.00$, and M3 represents at least one element selected from Cu, Sr, Ca, Nb, Si, and Al).

According to an aspect of the present disclosure, there is provided a non-aqueous electrolyte secondary battery comprising a positive electrode containing the above-described positive electrode active material for a non-aqueous electrolyte secondary battery; a negative electrode; and a non-aqueous electrolyte.

According to an aspect of the present disclosure, the positive electrode active material for a non-aqueous electrolyte secondary battery enables provision of a non-aqueous electrolyte secondary battery with a retarded increase in resistance during initial charge and discharge.

BRIEF DESCRIPTION OF DRAWINGS

[FIG. 1] FIG. 1 is a cross-sectional view of a non-aqueous electrolyte secondary battery according to an example embodiment.
[FIG. 2] FIG. 2 schematically illustrates how a first lithium transition metal composite oxide and a second lithium transition metal composite oxide are mixed in a positive electrode active material according to an example embodiment.

DESCRIPTION OF EMBODIMENTS

Anon-aqueous electrolyte secondary battery is charged and discharged as, for example, Li ions are moved between a positive electrode and a negative electrode. A phenomenon in which the battery capacity retention rate decreases is observed during initial charge and discharge of the non-aqueous electrolyte secondary battery, as some of the Li ions that have moved from the positive electrode to the negative electrode during charging remain absorbed by the negative electrode active material and will not be released from the negative electrode during discharging. This phenomenon is observed even when a carbon-based material such as typical graphite is used and is particularly remarkable when an irreversible material such as a Si-based material is used. Therefore, in order to reduce the decrease in capacity retention rate during initial charge and discharge, consideration is being given to a method of containing $Li_2NiO_2$ in the positive electrode as a Li replenishing agent, thereby supplying a sufficient amount of Li ions to the negative electrode during initial charging. However, as $Li_2NiO_2$ that has released Li during initial charging turns into highly active $LiNiO_2$, there are problems in that $LiNiO_2$ reacts with an electrolyte and causes a side reaction such as deterioration of $LiNiO_2$ itself or deposition of a decomposition reaction product of the electrolyte on the negative electrode.

Given these circumstances, the present inventors made diligent efforts to solve the above-described problems and as a result, discovered that the increase in resistance of the battery can be unusually retarded by using a positive electrode active material in which a first lithium transition metal composite oxide having on its surface a modification layer that contains, for example, Sr or Ca and a second lithium transition metal composite oxide serving as a Li replenishing agent coexist at a certain ratio. It is conjectured that the surface modification layer of the first lithium transition metal composite oxide protects the second lithium transition metal composite oxide from the surroundings and thereby suppresses the side reaction between the second lithium transition metal composite oxide from which Li has been released and the electrolyte.

An example embodiment of a non-aqueous electrolyte secondary battery according to the present disclosure will be described in detail below. Although a cylindrical battery including a wound electrode assembly housed in an outer housing having a cylindrical shape is described below by way of example, the electrode assembly is not limited to those having a wound configuration and may be a laminated electrode assembly including multiple positive electrodes and multiple negative electrodes alternately laminated one over another with a separator therebetween. The outer housing is not limited to those having a cylindrical shape and may have, for example, a rectangular, coin, or another shape, and the outer housing may be a battery case composed of a laminate sheet including a metal layer and a resin layer.

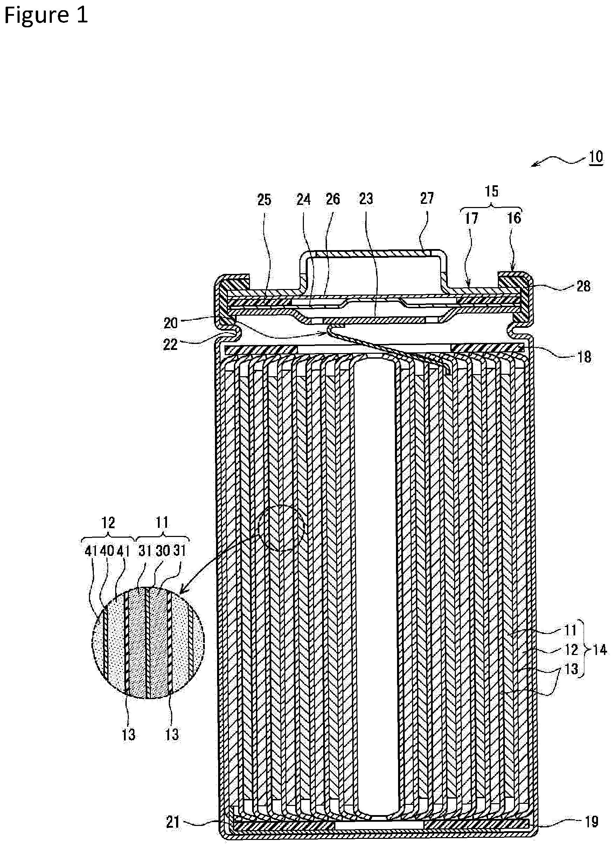

FIG. 1 is a cross-sectional view of a non-aqueous electrolyte secondary battery 10 according to an example embodiment. As illustrated in FIG. 1, the non-aqueous electrolyte secondary battery 10 includes an electrode assembly 14, a non-aqueous electrolyte, and a battery case 15 that houses the electrode assembly 14 and the non-aqueous electrolyte. The electrode assembly 14 has a wound configuration in which a positive electrode 11 and a negative electrode 12 are wound with a separator 13 therebetween. The battery case 15 includes an outer housing can 16 having a cylindrical shape with a closed bottom and a sealing assembly 17 covering the opening of the outer housing can 16.

The electrode assembly 14 is composed of the positive electrode 11 having an elongated shape, the negative electrode 12 having an elongated shape, two separators 13 having an elongated shape, a positive electrode tab 20 joined to the positive electrode 11, and a negative electrode tab 21 joined to the negative electrode 12. To prevent precipitation of lithium, the negative electrode 12 has a size slightly larger than the positive electrode 11. More specifically, the negative electrode 12 has longer lengths than the positive electrode 11 both in the length direction and in the width direction (shorter length direction). The two separators 13 have a size slightly larger than at least the positive electrode 11 and is, for example, disposed so that the positive electrode 11 is interposed between them.

The non-aqueous electrolyte secondary battery 10 includes insulating plates 18 and 19 that are respectively disposed above and below the electrode assembly 14. In the example illustrated in FIG. 1, the positive electrode tab 20 attached to the positive electrode 11 passes through a through hole in the insulating plate 18 and extends toward the sealing assembly 17, and the negative electrode tab 21 attached to the negative electrode 12 passes outside the insulating plate 19 and extends toward the bottom of the outer housing can 16. The positive electrode tab 20 is connected to an underside of a bottom plate 23 of the sealing assembly 17 by, for example, welding, and a cap 27 of the sealing assembly 17 that is electrically connected to the bottom plate 23 serves as a positive electrode terminal. The negative electrode tab 21 is connected to an inner surface of the bottom of the outer housing can 16 by, for example, welding, and the outer housing can 16 serves as a negative electrode terminal.

The outer housing can 16 is, for example, a metal container having a cylindrical shape with a closed bottom. A gasket 28 is provided between the outer housing can 16 and the sealing assembly 17, thereby hermetically sealing the space inside the battery case 15. The outer housing can 16 has a groove or inward projection 22 for supporting the sealing assembly 17, the groove or inward projection 22 being formed by, for example, pressing the side surface of the outer housing can 16 from the outside. The groove or inward projection 22 preferably has an annular shape extending along the circumference of the outer housing can 16, and supports the sealing assembly 17 on its upper surface.

The sealing assembly 17 has a configuration in which the bottom plate 23, a lower vent member 24, an insulating member 25, an upper vent member 26, and the cap 27 are stacked in that order from the side on which the electrode assembly 14 is located. The components of the sealing assembly 17 have, for example, either a disc shape or a ring shape and are, except for the insulating member 25, electrically connected to each other. The lower vent member 24 and the upper vent member 26 are connected to each other at their center portions, and the insulating member 25 is interposed between their peripheral portions. In response to an increase in internal pressure of the battery due to abnormal heat generation, the lower vent member 24 breaks as it is deformed so as to push the upper vent member 26 toward the cap 27, resulting in an interruption of the current path between the lower vent member 24 and the upper vent member 26. In response to a further increase in internal pressure, the upper vent member 26 breaks, letting gas escape through an opening of the cap 27.

The positive electrode 11, the negative electrode 12, the separator 13, and the non-aqueous electrolyte of the non-aqueous electrolyte secondary battery 10, and, in particular, a positive electrode active material contained in positive electrode mixture layers 31 of the positive electrode 11 will be described in detail below.

[POSITIVE ELECTRODE]

The positive electrode 11 includes a positive electrode current collector 30 and positive electrode mixture layers 31 that are formed on both sides of the positive electrode current collector 30. Examples of the positive electrode current collector 30 include foil of metal that is stable in an electric potential range of the positive electrode 11, such as aluminum or an aluminum alloy, and a film having such metal disposed in its surface layer. The positive electrode mixture layers 31 may contain a positive electrode active material, a conductive agent, and a binder. The positive electrode 11 can be prepared by, for example, applying positive electrode mixture slurry containing a positive electrode active material, a conductive agent, and a binder, to the surfaces of the positive electrode current collector 30, drying the coating, and then compressing it to form the positive electrode mixture layers 31 on both sides of the positive electrode current collector 30.

Examples of the conductive agent contained in the positive electrode mixture layers 31 include carbon-based materials such as carbon black, acetylene black, Ketjen black, and graphite. Examples of the binder contained in the positive electrode mixture layers 31 include polytetrafluoroethylene (PTFE), polyvinylidene fluoride (PVdF), and other fluorocarbon resins, polyacrylonitrile (PAN), polyimides, acrylic resins, and polyolefins. One or more of these resins may be used in combination with, for example, carboxymethylcellulose (CMC) or a salt thereof, or polyethylene oxide (PEO).

The positive electrode active material contained in the positive electrode mixture layers 31 contains a first lithium transition metal composite oxide and a second lithium transition metal composite oxide. The positive electrode active material contains the second lithium transition metal composite oxide in a mass ratio of greater than or equal to 0.1% and less than 15% and preferably greater than or equal to 1% and less than or equal to 14% relative to the total mass of the first lithium transition metal composite oxide and the second lithium transition metal composite oxide. It should be noted that the positive electrode active material may contain other lithium transition metal composite oxides or other compounds besides the first lithium transition metal composite oxide and the second lithium transition metal composite oxide without deviating from the intent of the present disclosure.

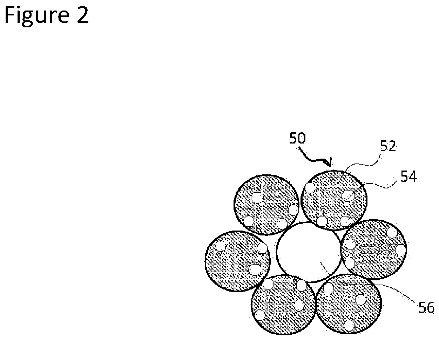

FIG. 2 schematically illustrates how a first lithium transition metal composite oxide 50 and a second lithium transition metal composite oxide 56 are mixed in a positive electrode active material. As described above, the positive electrode active material contains the first lithium transition metal composite oxide 50 in a greater ratio with respect to the second lithium transition metal composite oxide 56, thereby enabling a retarded increase in resistance of the battery as the first lithium transition metal composite oxide 50 including a surface modification layer 54, which will be described later, surrounds and protects the second lithium transition metal composite oxide 56.

The first lithium transition metal composite oxide 50 includes a core 52 and the surface modification layer 54 that is present at least on a surface of the core 52. The core 52 may be a secondary particle which is an aggregate of primary particles. In this case, the surface modification layer 54 is present at least on a surface of the secondary particle that constitutes the core 52 and may also be present on interfaces where the primary particles are in contact with each other.

The core 52 (secondary particle) may have a volume-based median diameter (D50) of, for example, 3 $\mu$m to 30 $\mu$m. D50 represents the particle diameter below which 50% of the frequency cumulative total lies in a volume-based particle size distribution. It is also called midpoint particle size. The particle size distribution of the lithium transition metal composite oxide secondary particle can be measured using a laser diffraction particle size distribution measurement device (for example, MT3000II manufactured by MicrotracBEL Corporation) using water as the dispersion medium. The primary particles that constitute the core 52 (secondary particle) may have a particle size of, for example, 0.05 $\mu$m to 1 $\mu$m. The particle size of a primary particle is measured in the form of the diameter of its circumscribed circle in a particle image observed using a scanning electron microscope (SEM).

The core 52 is a composite oxide represented by a general formula $Li_xNi_{1-y-z}Co_yM1_zO_2$ (where $0.97 \leq x \leq 1.2$, $0 \leq y \leq 0.2$, $0 < z \leq 0.5$, and M1 represents at least one element selected from Mn, W, Mg, Mo, Nb, Ti, Si, and Al). The value (1-y-z) which indicates the ratio of Ni relative to the total number of moles of metal elements excluding Li in the core 52 satisfies $0.3 \leq (1-y-z) < 1$, preferably satisfies $0.5 \leq (1-y-z) \leq 0.97$, and more preferably satisfies $0.8 \leq (1-y-z) \leq 0.95$. A high capacity battery is obtained by increasing the ratio (1-y-z) of Ni. The molar fractions of the metal elements contained in the core 52 are measured through inductively coupled plasma (ICP) emission spectroscopy analysis.

The core 52 may have a structure identified as space group R-3m. This enables maintenance of a stable crystal structure while having an increased capacity. The core 52 may have a layered structure including a transition metal layer, a Li layer, and an oxygen layer. It should be noted that, as will be described later, the surface modification layer 54 is thin with the ratio of the core 52 in the first lithium transition metal composite oxide 50 being large; therefore, the first lithium transition metal composite oxide 50 may be identified as space group R-3m.

The surface modification layer 54 is formed at least on a surface of the core 52, protecting the core 52 and also protecting the second lithium transition metal composite oxide 56. This suppresses the side reaction with the electrolyte and enables a retarded increase in resistance during initial charge and discharge. The surface modification layer 54 may be present in dotted form covering at least a portion of the surface of the core 52 as illustrated in FIG. 2, or may be present covering the entire surface of the core 52. The surface modification layer 54 may have a thickness of, for example, 0.1 nm to 5 nm.

The surface modification layer 54 contains M2 (M2 represents at least one or more elements selected from Sr, Ca, W, Mg, Nb, and Al). The surface modification layer 54 may contain M2 in the form of a compound that contains M2. Examples of the compound that contains M2 include oxides, hydroxides, and carbonates; specifically, for example, SrO, CaO, $Sr(OH)_2$, $Ca(OH)_2$, $SrCO_3$, and $CaCO_3$. The surface modification layer 54 may further contain Li. Examples of the compound that contains Li include $Li_2O$, LiOH, and $Li_2CO_3$.

The content of M2 in the surface modification layer 54 may be from 0.05 mol% to 0.5 mol% relative to the total number of moles of metal elements excluding Li in the core. In this range, electronic interaction enables stabilization of the surface modification layer 54. The surface modification layer 54 may contain multiple types of M2, and the total content of the multiple types of M2 may be from 0.05 mol% to 0.50 mol%. The presence of M2 in the surface modification layer 54 can be confirmed by energy dispersive X-ray spectroscopy (TEM-EDX). The content of M2 in the surface modification layer 54 can be measured through inductively coupled plasma (ICP) emission spectroscopy analysis of a solution in which the first lithium transition metal composite oxide 50 is dissolved in hydrofluoric-nitric acid.

A method of producing the first lithium transition metal composite oxide 50 may include, for example, a first step of obtaining a composite oxide including metal elements such as Ni and M1; a second step of mixing the composite oxide, a Li material, and an M2 material to obtain a mixture; and a third step of calcining the mixture to obtain the first lithium transition metal composite oxide 50. Parameters such as composition of the surface modification layer in the finally obtained positive electrode active material can be adjusted by controlling, for example, the mixing ratio of materials in the second step or the calcination temperature or time in the third step.

In the first step, for example, while a solution of a metal salt including metal elements such as Ni and M1 is being stirred, an alkali solution such as a sodium hydroxide solution is dripped to adjust the pH toward the alkali side (for example, 8.5 to 12.5), thereby precipitating (coprecipitating) a composite hydroxide including metal elements such as Ni and M1, and the composite hydroxide is calcined to obtain a composite oxide including metal elements such as Ni and M1. The calcination temperature is not particularly limited, but is in a range of, for example, from 300°C to 600°C.

In the second step, the composite oxide obtained in the first step, a Li material, and an M2 material are mixed to obtain a mixture. Examples of the Li material include $Li_2CO_3$, LiOH, $Li_2O_2$, $Li_2O$, $LiNO_3$, $LiNO_2$, $Li_2SO_4$, $LiOH \cdot H_2O$, LiH, and LiF. Examples of the M2 material include oxides, hydroxides, carbonates, nitrates, and sulfates of M2. In terms of making it easier to adjust the above-described parameters to fall in the above-defined ranges, the mixing ratio of the composite oxide obtained in the first step and the Li material is preferably a ratio such that, for example, the molar ratio of metal elements excluding Li:Li is in a range of from 1:0.98 to 1:1.22. In terms of making it easier to adjust the above-described parameters to fall in the above-defined ranges, the mixing ratio of the composite oxide obtained in the first step and the M2 material is preferably a ratio such that, for example, the molar ratio of metal elements excluding Li:M2 is in a range of from 1:0.0005 to 1:0.005. In the second step, the mixing of the composite oxide obtained in the first step, the Li material, and the M2 material may comprise optionally adding an additional metal material. The additional metal material is, for example, an oxide including one or more metal elements other than the metal elements included in the composite oxide obtained in the first step.

In the third step, the mixture obtained in the second step is calcined at a predetermined temperature for a predetermined period of time to obtain a calcined product. The calcination of the mixture in the third step may comprise, for example, a multi-step calcination process including a first calcination step of calcining the mixture in a stream of oxygen in a calcining furnace at a first temperature rise rate until the temperature reaches a first set temperature of greater than or equal to 450°C and less than or equal to 680°C; and after the first calcination step, a second calcination step of calcining the mixture in a stream of oxygen in the calcining furnace at a second temperature rise rate until the temperature reaches a second set temperature of greater than 680°C and less than or equal to 800°C. The first temperature rise rate may be in a range of from 1.5 °C/min to 5.5 °C/min, and the second temperature rise rate may be slower than the first temperature rise rate and may be in a range of from 0.1 °C/min to 3.5 °C/min. The multi-step calcination as described above enables adjustment of parameters such as composition of the surface modification layer 54 to fall in the above-defined ranges in the finally obtained first lithium transition metal composite oxide 50 according to an embodiment of the present disclosure. It should be noted that each of the first temperature rise rate and the second temperature rise rate may be set to a plurality of values within the above-defined ranges for different temperature ranges. In terms of adjusting the above-described parameters of the lithium transition metal composite oxide to fall in the above-defined ranges, the holding time of the first set temperature in the first calcination step is preferably from 0 hours to 5 hours and is more preferably from 0 hours to 3 hours. The holding time of the first set temperature refers to a period of time for which the first set temperature is maintained after the first set temperature is reached. In terms of adjusting the above-described parameters of the lithium transition metal composite oxide to fall in the above-defined ranges, the holding time of the second set temperature in the second calcination step is preferably from 1 hour to 10 hours and is more preferably 1 hour to 5 hours. The holding time of the second set temperature refers to a period of time for which the second set temperature is maintained after the second set temperature is reached. In terms of adjusting the above-described parameters to fall in the above-defined ranges, the calcination of the mixture may be performed in a stream of oxygen having, for example, an oxygen concentration of greater than or equal to 60%, and the flow rate of the oxygen stream may be in a range of 0.2 mL/min to 4 mL/min per 10 $cm^3$ calcining furnace and greater than or equal to 0.3 L/min per 1 kg mixture. This enables preparation of the first lithium transition metal composite oxide 50 including on the surface of the core 52 the surface modification layer 54 that contains M2. This first lithium transition metal composite oxide 50 may undergo washing, dehydration, and drying to remove impurities. The M2 material may be added to this first lithium transition metal composite oxide 50 during the washing or during the drying, and heat treatment may be performed, for example, in a vacuum atmosphere at 150°C to 400°C for 0.5 hours to 15 hours to prepare the first lithium transition metal composite oxide 50 including the surface modification layer 54.

A mixture may be prepared without adding the M2 material in the second step, the M2 material may be added after the third step, and heat treatment may be performed, for example, in a vacuum atmosphere at 150°C to 400°C for 0.5 hours to 15 hours to prepare the first lithium transition metal composite oxide 50.

The molar fractions of the metal elements contained in the first lithium transition metal composite oxide 50 obtained as described above are measured through inductively coupled plasma (ICP) emission spectroscopy analysis and can be represented by a general formula $Li_xNi_{1-y-z}Co_yM1_zM2_wO_2$ (where $0.97 \leq x \leq 1.2$, $0 \leq y \leq 0.2$, $0 < z \leq 0.5$, $0.0005 \leq w \leq 0.005$, M1 represents at least one element selected from Mn, W, Mg, Mo, Nb, Ti, Si, and Al, and M2 represents at least one or more elements selected from Sr, Ca, W, Mg, Nb, and Al).

Next, the second lithium transition metal composite oxide 56 will be described below.

The second lithium transition metal composite oxide 56 includes at least a compound represented by a general formula $Li_aNi_bM3_{1-b}O_2$ (where $1.5 \leq a \leq 2.5$, $0.95 \leq b \leq 1.00$, and M3 represents at least one element selected from Cu, Sr, Ca, Nb, Si, and Al). The compound represented by the general formula $Li_aNi_bM3_{1-b}O_2$ (hereinafter referred to as Li replenishing agent) contains a large amount of Li and enables supply of Li ions to the negative electrode 12 during initial charge and discharge. The Li replenishing agent after initial charge and discharge serves as a positive electrode active material as it releases and occludes Li ions during charge and discharge. The Li replenishing agent after initial charge and discharge may be, for example, $Li_cNiO_2$ ($0.5 \leq c \leq 1.5$).

The second lithium transition metal composite oxide 56 may be prepared, for example, as follows:

(1) Predetermined amounts of Li material, Ni material, and M3 material are mixed while being crushed, to prepare a mixture.
(2) The prepared mixture is, for example, calcined under an atmosphere of inert gas at 500°C to 800°C for 10 hours to 30 hours and further disintegrated, thereby obtaining the second lithium transition metal composite oxide 56.

The second lithium transition metal composite oxide 56 may also be obtained by first shaping the mixture into pellets in step (1) above, and then performing calcination and, subsequent to the calcination, disintegration in step (2) above.

Examples of the Li material include $Li_2CO_3$, LiOH, $Li_2O_2$, $Li_2O$, $LiNO_3$, $LiNO_2$, $Li_2SO_4$, $LiOH \cdot H_2O$, LiH, and LiF. Examples of the Ni material include NiO, $Ni(OH)_2$, $NiCO_3$, $NiSO_4$, and $Ni(NO_3)_2$. Examples of the M3 material include oxides, hydroxides, carbonates, nitrates, and sulfates of M3. The mixing ratio of the materials can be adjusted such that the composition of the obtained Li replenishing agent falls in the above-defined ranges. For example, $Li_2O$ and NiO may be mixed so that the molar ratio of Li relative to Ni is 2 to 2.1 to prepare the second lithium transition metal composite oxide 56 containing $Li_2NiO_2$ serving as the Li replenishing agent. Examples of the inert gas include $N_2$.

The second lithium transition metal composite oxide 56 may contain $Li_2O$ and NiO. When the second lithium transition metal composite oxide 56 is prepared as described above, the second lithium transition metal composite oxide 56 may contain $Li_2O$ and NiO as unreacted components.

After mixing and stirring of the second lithium transition metal composite oxide 56 and N-methyl pyrrolidone (NMP) at a mass ratio of 0.1:20 followed by room temperature storage for 24 hours, the amount of Li extracted by NMP is preferably less than or equal to 100 μmol/g. This method can measure the amount of Li present in the form easily extractable by NMP, contained in the second lithium transition metal composite oxide 56. With the amount of Li extracted by NMP being greater than 100 μmol/g, the properties of positive electrode mixture slurry may deteriorate.

The second lithium transition metal composite oxide 56 may have a structure identified as space group Immm. In particular, the Li replenishing agent contained in the second lithium transition metal composite oxide 56 may have a structure identified as space group Immm.

[NEGATIVE ELECTRODE]

The negative electrode 12 includes a negative electrode current collector 40 and negative electrode mixture layers 41 that are formed on both sides of the negative electrode current collector 40. Examples of the negative electrode current collector 40 include foil of metal that is stable in an electric potential range of the negative electrode 12, such as copper or a copper alloy, and a film having such metal disposed in its surface layer. The negative electrode mixture layers 41 may contain a negative electrode active material and a binder. The thickness of the negative electrode mixture layer 41 formed on each side of the negative electrode current collector 40 is, for example, 10 μm to 150 μm. The negative electrode 12 can be prepared by, for example, applying negative electrode mixture slurry containing, for example, a negative electrode active material and a binder, to the surfaces of the negative electrode current collector 40, drying the coating, and then rolling it to form the negative electrode mixture layers 41 on both sides of the negative electrode current collector 40.

The negative electrode active material contained in the negative electrode mixture layers 41 may be any material that is capable of reversibly occluding and releasing lithium ions without any other particular limitation; typically, a carbon-based material such as graphite is used. Examples of graphite include natural graphite such as flake graphite, massive graphite, and earthy graphite, and artificial graphite such as massive artificial graphite and graphitized mesophase carbon microbeads. Also, for example, metal such as Si or Sn that forms an alloy with Li, a metal compound that contains, for example, Si or Sn, or a lithium titanium composite oxide may be used as the negative electrode active material. Also, these materials with a carbon coating may be used. For example, a Si-containing compound represented by $SiO_x$ ($0.5 \leq x \leq 1.6$) or a Si-containing compound including Si microparticles dispersed in a lithium silicate phase represented by $Li_{2y}SiO_{(2+y)}$ ($0 < y < 2$) may be used in combination with graphite.

Similar to the positive electrode 11, examples of the binder contained in the negative electrode mixture layers 41 include PTFE, PVdF, and other fluorine-containing resins, PAN, polyimides, acrylic resins, and polyolefins, and preferably styrene-butadiene rubber (SBR) is used. The negative electrode mixture layers 41 may contain, for example, CMC or a salt thereof, polyacrylic acid (PAA) or a salt thereof, or polyvinyl alcohol (PVA).

[SEPARATOR]

For example, a porous sheet having ion permeability and insulating properties is used as the separator 13. Specific examples of the porous sheet include a microporous thin film, woven fabric, and nonwoven fabric. Suitable examples of the material for the separator include polyethylene, polypropylene, and other polyolefins and cellulose. The separator 13 may have either a single-layer structure or a multi-layer structure. The separator 13 may have, on its surface, a high heat resistance resin layer of, for example, an aramid resin and a filler layer that contains an inorganic compound filler.

[NON-AQUEOUS ELECTROLYTE]

The non-aqueous electrolyte includes, for example, a non-aqueous solvent and an electrolyte salt dissolved in the non-aqueous solvent. Examples of the non-aqueous solvent include esters, ethers, nitriles such as acetonitrile, amides such as dimethylformamide, and mixed solvents of two or more thereof. The non-aqueous solvent may contain a halogen-substituted product of these solvents in which hydrogens of the solvents are, at least in part, substituted with a halogen atom such as fluorine. Examples of the halogen-substituted product include fluorinated cyclic carbonate esters such as fluoroethylene carbonate (FEC), fluorinated chain carbonate esters, and fluorinated chain carboxylate esters such as fluoromethyl propionate (FMP).

Examples of the esters include cyclic carbonate esters such as ethylene carbonate (EC), propylene carbonate (PC), and butylene carbonate, chain carbonate esters such as dimethyl carbonate (DMC), ethyl methyl carbonate (EMC), diethyl carbonate (DEC), methyl propyl carbonate, ethyl propyl carbonate, and methyl isopropyl carbonate, cyclic carboxylate esters such as γ-butyrolactone (GBL) and γ-valerolactone (GVL), and chain carboxylate esters such as methyl acetate, ethyl acetate, propyl acetate, methyl propionate (MP), and ethyl propionate (EP).

Examples of the ethers include cyclic ethers such as 1,3-dioxolane, 4-methyl-1,3-dioxolane, tetrahydrofuran, 2-methyltetrahydrofuran, propylene oxide, 1,2-butylene oxide, 1,3-dioxane, 1,4-dioxane, 1,3,5-trioxane, furan, 2-methylfuran, 1,8-cineole, and crown ethers, and chain ethers such as 1,2-dimethoxyethane, diethyl ether, dipropyl ether, diisopropyl ether, dibutyl ether, dihexyl ether, ethyl vinyl ether, butyl vinyl ether, methyl phenyl ether, ethyl phenyl ether, butyl phenyl ether, pentyl phenyl ether, methoxytoluene, benzyl ethyl ether, diphenyl ether, dibenzyl ether, o-dimethoxybenzene, 1,2-diethoxyethane, 1,2-dibutoxyethane, diethylene glycol dimethyl ether, diethylene glycol diethyl ether, diethylene glycol dibutyl ether, 1,1-dimethoxymethane, 1,1-diethoxyethane, triethylene glycol dimethyl ether, and tetraethylene glycol dimethyl ether.

The electrolyte salt is preferably a lithium salt. Examples of the lithium salt include $LiBF_4$, $LiClO_4$, $LiPF_6$, $LiAsF_6$, $LiSbF_6$, $LiAlCl_4$, LiSCN, $LiCF_3SO_3$, $LiCF_3CO_2$, $Li(P(C_2O_4)F_4)$, $LiPF_{6-x}(C_nF_{2n+1})_x$ (where $1 < x < 6$, and n is 1 or 2), $LiB_{10}Cl_{10}$, LiCl, LiBr, LiI, lithium chloroborane, lithium lower aliphatic carboxylates, borates such as $Li_2B_4O_7$ and $Li(B(C_2O_4)F_2)$, and imide salts such as $LiN(SO_2CF_3)_2$ and $LiN(C_1F_{21+1}SO_2)(C_mF_{2m+1}SO_2)$ {where 1 and m are integers of 0 or greater}. One of these lithium salts may be used alone, or two or more of these lithium salts may be used as a mixture. Among these, $LiPF_6$ is preferably used in terms of, for example, ionic conductivity and electrochemical stability. The concentration of the lithium salt is, for example, 0.8 mol to 1.8 mol per liter of the non-aqueous solvent. Additionally, vinylene carbonate or a propane sultone-based additive may be added.

<EXAMPLES>

The present disclosure will be further described below with reference to Examples and Comparative Examples, but the present disclosure is not limited to the following Examples.

<Example 1>

[Production of First Lithium Transition Metal Composite Oxide]

A composite hydroxide represented by $[Ni_{0.91}Co_{0.04}Al_{0.05}](OH)_2$ obtained through a coprecipitation process was calcined at 500°C for 8 hours to obtain a composite oxide $(Ni_{0.91}Co_{0.04}Al_{0.05}O_2)$ (first step). Next, lithium hydroxide (LiOH), the above-described composite oxide, and $Ca(OH)_2$ were mixed so that the molar ratio of Li to the total amount of Ni, Co, and Al to Ca was 1.02:1:0.0025 to obtain a mixture (second step). Under a stream of oxygen having an oxygen concentration of 95% (having a flow rate of 2 mL/min per 10 cm$^3$ and 5 L/min per 1 kg mixture), this mixture was calcined at a temperature rise rate of 2.0 °C/min from room temperature to 650°C, and then calcined at a temperature rise rate of 0.5 °C/min from 650°C to 720°C. This calcined product was washed to remove impurities, thereby obtaining a first lithium transition metal composite oxide (third step). As a result of ICP analysis, the composition of the first lithium transition metal composite oxide was $LiNi_{0.91}Co_{0.04}Al_{0.05}Ca_{0.0025}O_2$. The content of Ca in the surface modification layer was 0.25 mol% relative to the total number of moles of the metal elements excluding Li in the core. The first lithium transition metal composite oxide was identified as space group R-3m using a X-ray diffraction method. Additionally, it was confirmed through TEM-EDX observation of the particle surface of the first lithium transition metal composite oxide that the primary particle surface was partially covered with Ca.

[Production of Second Lithium Transition Metal Composite Oxide]

After $Li_2O$ and NiO were weighed so that the molar ratio of Li and Ni was 2.05:1, these were mixed while being crushed, to prepare a mixture. Next, the prepared mixture was calcined under $N_2$ atmosphere at 650°C for 20 hours and further disintegrated, thereby obtaining a second lithium transition metal composite oxide. The second lithium transition metal composite oxide contained $Li_2NiO_2$, $Li_2O$, and NiO, and was identified as space group Immm using a X-ray diffraction method. After mixing and stirring of the second lithium transition metal composite oxide and NMP at a mass ratio of 0.1:20 followed by room temperature storage for 24 hours, the amount of Li extracted by NMP was 87 $\mu$mol/g.

[Preparation of Positive Electrode]

The first lithium transition metal composite oxide and the second lithium transition metal composite oxide were mixed at a mass ratio of 95:5 to prepare a positive electrode active material. This positive electrode active material, acetylene black (AB), and polyvinylidene fluoride (PVdF) were mixed at a solid content mass ratio of 92:5:3, an appropriate amount of N-methyl pyrrolidone (NMP) was added to this mixture, and then the resulting mixture was kneaded to prepare positive electrode mixture slurry. This positive electrode mixture slurry was applied to a positive electrode current collector composed of aluminum foil, and after the applied film was dried, the applied film was rolled using a rolling roller and cut into pieces of a predetermined electrode size to obtain a positive electrode having positive electrode mixture layers on both sides of the positive electrode current collector. A portion of the positive electrode was an exposed portion where a surface of the positive electrode current collector was exposed.

[Formulation of Non-Aqueous Electrolyte]

Ethylene carbonate (EC) and ethyl methyl carbonate (EMC) were mixed at a volume ratio of 3:7, and lithium hexafluorophosphate ($LiPF_6$) was dissolved in the resulting mixed solvent with a concentration of 1.0 mol/L to prepare a non-aqueous electrolyte.

[Preparation of Test Cell]

As the negative electrode, Li foil cut into a predetermined size was used. An aluminum lead was attached to the exposed portion of the above-described positive electrode, a nickel lead was attached to a predetermined position of the negative electrode, and the positive electrode and the negative electrode were opposed to each other with a polyolefin separator therebetween to prepare an electrode assembly. This electrode assembly was placed in an outer housing, the inside of the outer housing was filled with the above-described non-aqueous electrolyte, and then the opening of the outer housing was sealed to obtain a test cell.

[Calculation of Resistance Increase Rate]

The above-described test cell was subjected to the following cycle test. The resistance after one cycle of the cycle test and the resistance after fifteen cycles were determined using battery HiTester BT3562 (testing source frequency: 1 kHz) manufactured by Hioki E.E. Corporation, and the resistance increase rate was calculated by the following formula:

$$\text{Resistance Increase Rate (\%)} = (\text{Resistance After Fifteen Cycles} - \text{Resistance After One Cycle}) / (\text{Resistance After One Cycle})$$

<Cycle Test>

Under a temperature environment of 25°C, the test cell was charged at a constant current of 0.3 C until the battery voltage reached 4.3 V and charged at a constant voltage of 4.3 V until the current value reached 0.02 C. Subsequently, the test cell was discharged at a constant current of 0.05 C until the battery voltage reached 2.5 V This charging and discharging cycle was repeated 15 times.

<Example 2>

Evaluation was performed using a test cell obtained in a similar manner to Example 1 except that in the preparation of the positive electrode, the first lithium transition metal composite oxide and the second lithium transition metal composite oxide were mixed at a mass ratio of 98:2 to obtain a positive electrode active material.

<Example 3>

Evaluation was performed using a test cell obtained in a similar manner to Example 1 except that in the preparation of the positive electrode, the first lithium transition metal composite oxide and the second lithium transition metal composite oxide were mixed at a mass ratio of 90:10 to obtain a positive electrode active material.

<Example 4>

Evaluation was performed using a test cell obtained in a similar manner to Example 1 except that in the preparation of the positive electrode, the first lithium transition metal composite oxide and the second lithium transition metal composite oxide were mixed at a mass ratio of 88:12 to obtain a positive electrode active material.

<Example 5>

Evaluation was performed using a test cell obtained in a similar manner to Example 1 except that in the second step for the production of the first lithium transition metal composite oxide, LiOH, composite oxide, and $Ca(OH)_2$ were

mixed so that the molar ratio of Li, the total amount of Ni, Co, and Al, and Ca was 1.02:1:0.005 to obtain a mixture. As a result of ICP analysis, the composition of the first lithium transition metal composite oxide was $LiNi_{0.91}Co_{0.04}Al_{0.05}Ca_{0.005}O_2$. The content of Ca in the surface modification layer was 0.5 mol% relative to the total number of moles of the metal elements excluding Li in the core. The first lithium transition metal composite oxide was identified as space group R-3m using a X-ray diffraction method.

<Example 6>

Evaluation was performed using a test cell obtained in a similar manner to Example 1 except that in the second step for the production of the first lithium transition metal composite oxide, LiOH, composite oxide, and $Sr(OH)_2$ were mixed so that the molar ratio of Li, the total amount of Ni, Co, and Al, and Sr was 1.02:1:0.0008 to obtain a mixture. As a result of ICP analysis, the composition of the first lithium transition metal composite oxide was $LiNi_{0.91}Co_{0.04}Al_{0.05}Sr_{0.0008}O_2$. The content of Sr in the surface modification layer was 0.08 mol% relative to the total number of moles of the metal elements excluding Li in the core. The first lithium transition metal composite oxide was identified as space group R-3m using a X-ray diffraction method.

<Example 7>

Evaluation was performed using a test cell obtained in a similar manner to Example 1 except that in the second step for the production of the first lithium transition metal composite oxide, LiOH, composite oxide, and $Sr(OH)_2$ were mixed so that the molar ratio of Li, the total amount of Ni, Co, and Al, and Sr was 1.02:1:0.0015 to obtain a mixture. As a result of ICP analysis, the composition was $LiNi_{0.91}Co_{0.04}Al_{0.05}Sr_{0.0015}O_2$. The content of Sr in the surface modification layer was 0.15 mol% relative to the total number of moles of the metal elements excluding Li in the core. The first lithium transition metal composite oxide was identified as space group R-3m using a X-ray diffraction method.

<Comparative Example 1>

Evaluation was performed using a test cell obtained in a similar manner to Example 1 except that for the production of the first lithium transition metal composite oxide, $Ca(OH)_2$ was not added in the second step.

<Comparative Example 2>

Evaluation was performed using a test cell obtained in a similar manner to Example 1 except that in the preparation of the positive electrode, the first lithium transition metal composite oxide and the second lithium transition metal composite oxide were mixed at a mass ratio of 85:15 to obtain a positive electrode active material.

<Comparative Example 3>

Evaluation was performed using a test cell obtained in a similar manner to Example 1 except that for the production of the first lithium transition metal composite oxide, $Ca(OH)_2$ was not added in the second step, and in the preparation of the positive electrode, the first lithium transition metal composite oxide and the second lithium transition metal composite oxide were mixed at a mass ratio of 90: 10 to obtain a positive electrode active material.

Table 1 lists resistance increase rates for the Examples and the Comparative Examples. The resistance increase rates for the test cells according to Examples 1 to 7 and Comparative Examples 2 to 4 listed in Table 1 are represented relative to the resistance increase rate for the test cell according to Comparative Example 1, which is assumed as 100. Table 1 also lists M2 elements contained in the surface modification layer of the first lithium transition metal composite oxide and their content, along with the mixing ratio of the first lithium transition metal composite oxide and the second lithium transition metal composite oxide in the positive electrode active material.

[Table 1]

| | Positive Electrode Active Material | | | | Measurement Results |
| --- | --- | --- | --- | --- | --- |
| | Surface Modification Layer | | Mixing Ratio (Lithium Transition Metal Composite Oxide) | | Resistance Increase Rate |
| | M2 | Content | First | Second | |
| Example 1 | Ca | 0.25 | 95 | 5 | 98.3 |

(continued)

| | Positive Electrode Active Material | | | | Measurement Results |
|---|---|---|---|---|---|
| | Surface Modification Layer | | Mixing Ratio (Lithium Transition Metal Composite Oxide) | | Resistance Increase Rate |
| | M2 | Content | First | Second | |
| Example 2 | Ca | 0.25 | 98 | 2 | 97.5 |
| Example 3 | Ca | 0.25 | 90 | 10 | 98.9 |
| Example 4 | Ca | 0.25 | 88 | 12 | 99.1 |
| Example 5 | Ca | 0.50 | 95 | 5 | 98.2 |
| Example 6 | Sr | 0.08 | 95 | 5 | 98.6 |
| Example 7 | Sr | 0.15 | 95 | 5 | 98.4 |
| Comparative Example 1 | - | - | 95 | 5 | 100 |
| Comparative Example 2 | Ca | 0.25 | 85 | 15 | 103.4 |
| Comparative Example 3 | - | - | 90 | 10 | 104.0 |

As shown in Table 1, the test cells according to Examples 1 to 7 had lower resistance increase rates than those of the test cells according to Comparative Examples 1 to 3.

REFERENCE SIGNS LIST

10 non-aqueous electrolyte secondary battery
11 positive electrode
12 negative electrode
13 separator
14 electrode assembly
15 battery case
16 outer housing can
17 sealing assembly
18, 19 insulating plate
20 positive electrode tab
21 negative electrode tab
22 groove or inward projection
23 bottom plate
24 lower vent member
25 insulating member
26 upper vent member
27 cap
28 gasket
30 positive electrode current collector
31 positive electrode mixture layer
40 negative electrode current collector
41 negative electrode mixture layer
50 first lithium transition metal composite oxide
52 core
54 surface modification layer
56 second lithium transition metal composite oxide

**Claims**

1. A positive electrode active material for a non-aqueous electrolyte secondary battery, comprising a first lithium transition metal composite oxide and a second lithium transition metal composite oxide,

   wherein the mass ratio of the second lithium transition metal composite oxide is greater than or equal to 0.1% and less than 15% relative to the total mass of the first lithium transition metal composite oxide and the second lithium transition metal composite oxide,
   wherein the first lithium transition metal composite oxide comprises a core represented by a general formula $Li_xNi_{1-y-z}Co_yM1_zO_2$ (where $0.97 \leq x \leq 1.2$, $0 \leq y \leq 0.2$, $0 < z \leq 0.5$, and M1 represents at least one element selected from Mn, W, Mg, Mo, Nb, Ti, Si, and Al) and a surface modification layer present at least on a surface of the core,
   wherein the surface modification layer contains M2 (M2 represents at least one or more elements selected from Sr, Ca, W, Mg, Nb, and Al), and
   wherein the second lithium transition metal composite oxide comprises at least a compound represented by a general formula $Li_aNi_bM3_{1-b}O_2$ (where $1.5 \leq a \leq 2.5$, $0.95 \leq b \leq 1.00$, and M3 represents at least one element selected from Cu, Sr, Ca, Nb, Si, and Al).

2. The positive electrode active material for a non-aqueous electrolyte secondary battery according to claim 1, wherein the content of M2 in the surface modification layer is 0.05 mol% to 0.5 mol% relative to the total number of moles of metal elements excluding Li in the core.

3. The positive electrode active material for a non-aqueous electrolyte secondary battery according to claim 1 or 2, wherein the core is identified as space group R-3m.

4. The positive electrode active material for a non-aqueous electrolyte secondary battery according to any one of claims 1 to 3, wherein the second lithium transition metal composite oxide is identified as space group Immm.

5. The positive electrode active material for a non-aqueous electrolyte secondary battery according to any one of claims 1 to 4, wherein the second lithium transition metal composite oxide further comprises $Li_2O$ and NiO.

6. The positive electrode active material for a non-aqueous electrolyte secondary battery according to any one of claims 1 to 5, wherein after mixing and stirring of the second lithium transition metal composite oxide and N-methyl pyrrolidone at a mass ratio of 0.1:20 followed by room temperature storage for 24 hours, the amount of Li extracted by N-methyl pyrrolidone is less than or equal to 100 $\mu$mol/g.

7. A non-aqueous electrolyte secondary battery comprising a positive electrode containing the positive electrode active material for a non-aqueous electrolyte secondary battery according to any one of claims 1 to 6; a negative electrode; and a non-aqueous electrolyte.

# Figure 1

Figure 2

## INTERNATIONAL SEARCH REPORT

International application No.

**PCT/JP2021/030128**

| A. | CLASSIFICATION OF SUBJECT MATTER |
|---|---|

*H01M 4/36*(2006.01)i; *H01M 4/505*(2010.01)i; *H01M 4/525*(2010.01)i
FI:   H01M4/525; H01M4/505; H01M4/36 E; H01M4/36 C

According to International Patent Classification (IPC) or to both national classification and IPC

| B. | FIELDS SEARCHED |
|---|---|

Minimum documentation searched (classification system followed by classification symbols)

H01M4/00-4/62

Documentation searched other than minimum documentation to the extent that such documents are included in the fields searched

Published examined utility model applications of Japan 1922-1996
Published unexamined utility model applications of Japan 1971-2021
Registered utility model specifications of Japan 1996-2021
Published registered utility model applications of Japan 1994-2021

Electronic data base consulted during the international search (name of data base and, where practicable, search terms used)

| C. | DOCUMENTS CONSIDERED TO BE RELEVANT | |
|---|---|---|

| Category* | Citation of document, with indication, where appropriate, of the relevant passages | Relevant to claim No. |
|---|---|---|
| Y | JP 2015-536541 A (LG CHEM, LTD) 21 December 2015 (2015-12-21) paragraphs [0009]-[0011], [0013], [0018], [0020], [0034]-[0038] | 1-7 |
| Y | KR 10-2010-0036896 A (IUCF-HYU (INDUSTRY-UNIVERSITY COOPERATION FOUNDATION HANYANG UNIVERSITY)) 08 April 2010 (2010-04-08) paragraphs [0018], [0020]-[0024], [0066]-[0073], example 1 | 1-7 |
| Y | JP 2017-224590 A (TOSOH FINECHEM CORP) 21 December 2017 (2017-12-21) paragraphs [0036], [0084], example 18 | 1-7 |
| A | JP 2012-142156 A (SONY CORP) 26 July 2012 (2012-07-26) claim 1, paragraphs [0135]-[0142], examples 1-14, 1-15 | 1-7 |
| A | JP 2019-506703 A (TODA AMERICA, INC) 07 March 2019 (2019-03-07) claim 1, paragraphs [0058], [0072], example 1 | 1-7 |
| A | JP 2020-513145 A (LG CHEMICAL LTD) 30 April 2020 (2020-04-30) claims 1-3, paragraphs [0063]-[0065], examples 1-4 | 1-7 |

☐ Further documents are listed in the continuation of Box C.          ☑ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **18 October 2021** | **02 November 2021** |

| Name and mailing address of the ISA/JP | Authorized officer |
|---|---|
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (January 2015)

## INTERNATIONAL SEARCH REPORT
### Information on patent family members

International application No.

**PCT/JP2021/030128**

| Patent document cited in search report | | | Publication date (day/month/year) | Patent family member(s) | | | Publication date (day/month/year) |
|---|---|---|---|---|---|---|---|
| JP | 2015-536541 | A | 21 December 2015 | US | 2015/0340692 | A1 | |
| | | | | paragraphs [0009]-[0013], [0015], [0022], [0024], [0040]-[0046] | | | |
| | | | | WO | 2015/034257 | A1 | |
| | | | | EP | 2905831 | A1 | |
| | | | | KR | 10-2015-0028206 | A | |
| | | | | CN | 104781961 | A | |
| | | | | CN | 110783535 | A | |
| KR | 10-2010-0036896 | A | 08 April 2010 | (Family: none) | | | |
| JP | 2017-224590 | A | 21 December 2017 | (Family: none) | | | |
| JP | 2012-142156 | A | 26 July 2012 | US | 2012/0164533 | A1 | |
| | | | | claim 1, paragraphs [0140]-[0146], examples 1-14, 1-15 | | | |
| | | | | CN | 102569878 | A | |
| JP | 2019-506703 | A | 07 March 2019 | US | 2017/0207455 | A1 | |
| | | | | claim 1, paragraphs [0074], [0089], example 1 | | | |
| | | | | WO | 2017/123836 | A1 | |
| | | | | KR | 10-2018-0121484 | A | |
| | | | | CN | 109071266 | A | |
| JP | 2020-513145 | A | 30 April 2020 | US | 2020/0335790 | A1 | |
| | | | | claims 1-3, paragraphs [0072]-[0074], examples 1-4 | | | |
| | | | | WO | 2019/107808 | A1 | |
| | | | | EP | 3595063 | A1 | |
| | | | | KR | 10-2019-0064397 | A | |
| | | | | CN | 110447132 | A | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 6058151 B